# EUROPÄISCHE PATENTSCHRIFT

(11) **EP 3 372 543 B1**
(45) Veröffentlichungstag und Bekanntmachung des Hinweises auf die Patenterteilung: **13.05.2020**
(21) Anmeldenummer: 18159944.0
(22) Anmeldetag: 05.03.2018
(51) Int. Cl.: B65H 49/08, B65H 57/18, B23K 9/133, B23K 9/173

(54) **NIEDERHALTER FÜR IN DRAHTFÄSSER EINBRINGBARE DRAHTCOILS**
RETAINING DEVICE FOR COILS OF WIRE IN WIRE BARRELS
ÉLÉMENT DE RETENUE POUR FIL MÉTALLIQUE RECEVABLE DANS UN CORPS CYLINDRIQUE À FIL

(30) Priorität: 06.03.2017 DE 102017104586
(43) Veröffentlichungstag der Anmeldung: 12.09.2018
(73) Patentinhaber: WDI Westfälische Drahtindustrie GmbH Werk Rothenburg, 06193 Wettin-Löbejun (DE)
(72) Erfinder: Bornemann, Mario, 06420 Könnern (DE); Fölber, Bernd, 04519 Rackwitz OT Lemsel (DE)
(74) Vertreter: Gulde & Partner

(56) Entgegenhaltungen:
- EP-A1- 2 439 005
- CN-A- 105 290 558
- JP-A- 2007 238 323
- JP-U- S 622 569
- US-A1- 2011 186 677

## Beschreibung

Die Erfindung betrifft einen Niederhalter für in Drahtfässer einbringbare Drahtcoils.

Unter Drahtcoil wird ein zu einem Bund aufgewickelter Draht verstanden. Der Draht ist also schleifenförmig als Endlosdraht innerhalb des Coils aufgewickelt. Derartige Drahtcoils werden beispielsweise bei CO₂- Schweißdrähten, aber auch bei höherfesten Stahldrähten, beispielsweise Federstahldraht verwendet. Zur Weiterverarbeitung wird ein Drahtende des Drahtcoils einer Verarbeitungsmaschine, beispielsweise einem Schweißautomat zugeführt. Hierbei erfolgt ein automatisches Abführen des Drahtes aus dem Coil. Üblicherweise wird hierbei ein Drahtende vom Inneren des Coils nach oben abgezogen.

Die Drahtcoils werden hierzu in sogenannte Drahtfässer eingebracht. Die Drahtfässer können runde aber auch andere Querschnittsformen aufweisen.

Um ein unkontrolliertes Ablaufen des Drahtes aus dem Coil zu verhindern, werden Niederhalter eingesetzt.

Ein derartiger Niederhalter ist beispielsweise in DE 20 2011 108 769 U1 offenbart.

Der Niederhalter umfasst ein auf einer oberen Schicht des Drahtcoils anordbares Grundelement, ein oberhalb des Grundelementes angeordnetes Führungselement für aus dem Drahtcoil ablaufenden Draht und wenigstens ein Verbindungselement zwischen dem Grundelement und dem Führungselement. Die Führungselemente sind hierbei starr ausgebildet und tragen ein als drehbare Drahtführung ausgebildetes Führungselement. Dieser Niederhalter zeichnet sich durch die drehbare Drahtführung und dem somit notwendigerweise vorhandenen Lager durch einen relativ komplizierten Aufbau aus. Bei den robusten Bedingungen unter dem die Niederhalter eingesetzt werden, sind diese zudem störanfällig.

JP 2007 238 323 A offenbart einen Niederhalter für Drahtcoils mit einem Grundelement, einem oberhalb des Grundelementes angeordneten Führungselement, wie aus dem Drahtcoils ablaufenden Draht und wenigstens einem Verbindungselement zwischen dem Grundelement und dem Führungselement. Das Grundelement ist als Ringscheibe ausgebildet, die auf einer Stirnfläche des Drahtcoils aufliegt.

US 2011/0186677A offenbart ebenfalls einen Niederhalter für Drahtcoils mit einem Grundelement, einem oberhalb des Grundelementes angeordneten Führungselement, für aus dem Drahtcoil ablaufenden Draht und wenigstens ein Verbindungselement zwischen dem Grundelement und dem Führungselement. Die Verbindungselemente sind von gradlinig auf kürzestem Wege zwischen dem Führungselement und Grundelement angeordneten Verbindungselementen gebildet. Das Grundelement selber besteht aus zwei koaxial zueinander angeordneten ringförmigen Halteelementen die in einer horizontalen Ebene angeordnet sind und somit auf der Stirnfläche des Drahtcoils aufliegen.

CN 105290558 A offenbart einen Niederhalter für in Drahtfässer einbringbare Drahtcoils. Ein Grundelement weist ringförmige Halteelemente auf, die koaxial zueinander angeordnet sind. Die ringförmigen Halteelemente besitzen einen unterschiedlichen Durchmesser, wobei ein durchmessergrößeres Halteelement einen größeren Abstand zu einem Führungselement des Grundelements aufweist, als ein benachbartes durchmesserkleineres Halteelement.

Der Erfindung liegt die Aufgabe zu Grunde einen Niederhalter für in Drahtfässer einbringbare Drahtcoils zu schaffen, der sich durch einen einfachen Aufbau auszeichnet und eine Schlaufenbildung beim Abzug des Drahtes vom Drahtcoil sicher verhindert.

Erfindungsgemäß wird diese Aufgabe durch einen Niederhalter mit den in Anspruch 1 genannten Merkmalen gelöst. Dadurch, dass das wenigstens eine Verbindungselement - zwischen dem Grundelement und Führungselement - entlang einer spiralförmig verlaufenden Kurvenbahn zwischen dem Grundelement und dem Führungselement verläuft, wird vorteilhaft erreicht, dass zwischen dem Grundelement und Führungselement keine starre, sondern eine federnde Verbindung besteht. Diese federnde Verbindung sorgt dafür, dass der von dem Drahtcoil ablaufende Draht entsprechend seiner momentanen Position durch das Führungselement federnd unterstützt wird. Eine unkontrollierte Schlaufenbildung innerhalb des Drahtcoils wird somit vermieden.

Gemäß der Erfindung ist ferner vorgesehen, dass das Grundelement wenigstens zwei ringförmig angeordnete Halteelemente für die Verbindungselemente aufweist, die koaxial zueinander angeordnet sind, wobei die ringförmigen Halteelemente vorzugsweise einen unterschiedlichen Durchmesser besitzen. Hierdurch wird vorteilhaft möglich, in einfacherweise eine Größenanpassung des Grundelementes und somit auch des Niederhalters an die das Drahtcoil aufnehmenden Drahtfässer zu ermöglichen.

Ferner ermöglichen die ringförmig angeordneten Halteelemente, die vorzugsweise durch Haltestege untereinander verbunden sind, ein bereits federnd ausgebildetes Grundelement, das dann die spiralförmig verlaufenden Verbindungselemente, mittels der das federnde Abfangen des ablaufenden Drahtes letztendlich seiner tatsächlichen Position erfolgt, trägt.

Im Sinne der Erfindung ist ferner vorgesehen, dass das durchmesserkleinere Halteelement einen geringen Abstand zum Führungselement aufweist, als das jeweils beanstandete durchmessergrößere Halteelement. Hierdurch wird ein in etwa kegelstupfförmiger Aufbau des Grundelementes aus den einzelnen ringförmigen Halteelementen erreicht, der einerseits eine Führung für den ablaufenden Draht von dem Drahtcoil bietet und andererseits eine Durchmesseranpassung des Grundelementes an das Führungselement unterstützt.

In bevorzugter Ausgestaltung der Erfindung ist vorgesehen, dass drei um je 120° versetzt verlaufende Verbindungselemente angeordnet sind. Hierdurch wird erreicht, dass durch diese versetzt angeordnete Verbindungselemente, die jeweils spiralförmig zwischen dem Grundelement und dem Führungselement verlaufen, eine besonders gute federnde Führung des ablaufenden Drahtes unabhängig von seiner momentanen Position erzielt wird.

Die spiralförmig verlaufenden Verbindungselemente sind vorzugsweise mit dem durchmesserkleinsten Haltering und dem Führungselement verbunden. Hierdurch lässt sich eine gezielte Federcharakteristik des Niederhalters erzielen, da über die Differenz der Radien des durchmesserkleinsten Halteelementes und dem Führungselement und der Bogenlänge der Verbindungselemente die Federcharakteristik der Niederhalter optimal auf die entsprechenden Drahteigenschaften des vom Drahtcoil ablaufenden Drahtes abgestellt werden kann.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der dazugehörigen Zeichnungen näher erläutert. Es zeigen:
- Figur 1: einen erfindungsgemäßen Niederhalter in Draufsicht ;
- Figur 2: einen erfindungsgemäßen Niederhalter in einer Seitenansicht;
- Figur 3: einen erfindungsgemäßen Niederhalter in einer schematischen Perspektivansicht und
- Figur 4: der Einsatz des erfindungsgemäßen Niederhalters in einem Drahtfass.

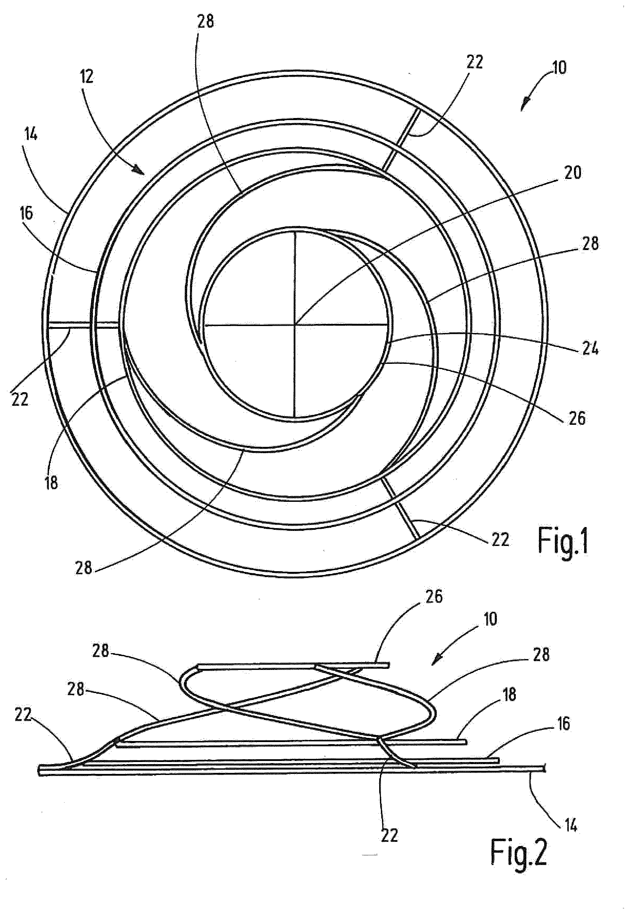

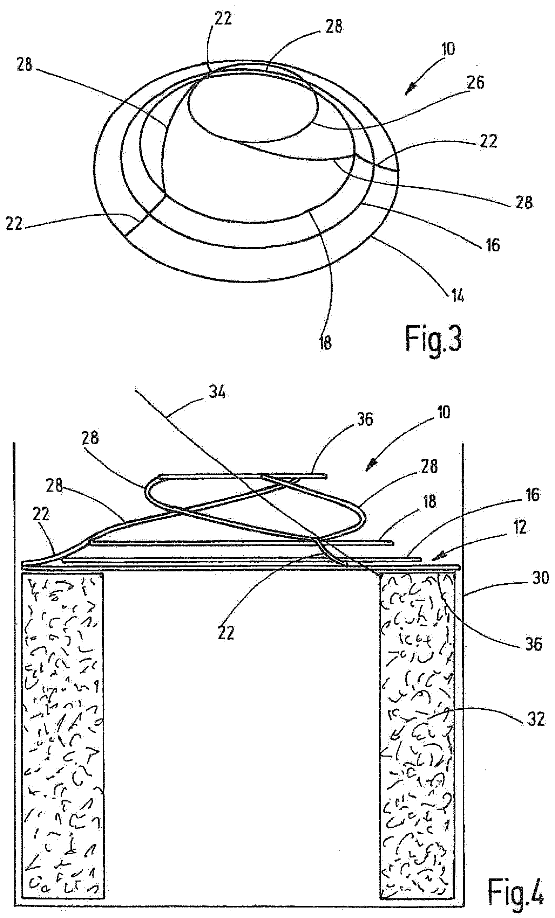

Die Figur 1 zeigt in Draufsicht einen insgesamt mit 10 bezeichneten Niederhalter für in Drahtfässer einbringbare Drahtcoils. Der Einsatz des Niederhalters 10 wird anhand von Figur 4 dann noch näher gezeigt.

Der Niederhalter 10 besitzt ein Grundelement 12, das von drei ringförmigen Halteelementen 14, 16 und 18 gebildet ist. Die Halteelemente 14, 16 und 18 besitzen jeweils eine unterschiedlichen Durchmesser und sind koaxial zu einer gedachten Längsachse 20 des Niederhalters 10 angeordnet.

Die Halteelemente 14, 16, und 18 sind untereinander mittels Haltestegen 22 verbunden. Im gezeigten Beispiel sind drei Haltestege 22 und drei Halteelemente 14, 16 und 18 gezeigt. Nach weiteren, nicht dargestellten Ausführungsbeispielen können die Anzahl der ringförmigen Halteelemente und die Anzahl der Haltestege variieren. Es können also weniger oder auch mehr als drei Haltelemente beziehungsweise Haltestege vorgesehen sein.

Der Niederhalter 10 umfasst ferner ein Führungselement 24, das von einem geschlossenen Ringelement 26 gebildet ist. Das Führungselement 24 ist mit dem Grundelement 12 über Verbindungselemente 28 verbunden.

Im gezeigten Beispiel sind drei Verbindungselemente 28 vorgesehen, wobei die Anzahl der Verbindungselemente 28 auch kleiner oder größer als 3 sein kann. Die Verbindungselemente 28 verlaufen entlang einer spiralförmig verlaufenden Kurvenbahn. Die Verbindungselemente 28 verbinden hierbei das durchmesserkleinste ringförmige Halteelement 18 des Grundelementes 12 mit dem Ringelement 26 des Führungselementes 24.

In Figur 1 wird deutlich, dass die Haltestege 22 radial zu der Längsachse 20 und die Verbindungselemente 28 exzentrisch zu der Längsachse 20 verlaufen.

Figur 2 zeigt Niederhalter 10 in einer Seitenansicht, wobei gleiche Teile wie in Figur 1 mit gleichen Bezugszeichen versehen und nicht nochmals erläutert sind.

Es wird deutlich, dass die Haltestege 22 und die Verbindungselemente 28 einstückig mit den entsprechenden Verläufen ausgebildet sein können.

Sämtliche Bestandteile des Niederhalters 10 können aus einem Draht, beispielsweise Stahldraht mit einem Durchmesser von 5 mm gebildet sein.

Ein Durchmesser des Halteelementes 14 beträgt beispielsweise 550 mm, ein Durchmesser des Halteelementes 16 beispielsweise 450 mm und ein Durchmesser des Halteelementes 18 beispielsweise 380 mm. Ein Durchmesser des Ringelementes 26 beträgt beispielsweise 210 mm.

Die Verbindungselemente 28 haben beispielsweise eine Bogenlänge von 230 mm und verlaufen auf einem Radius von 225 mm.

In Figur 2 wird auch deutlich, dass die Halteelemente 14, 16, und 18 einen unterschiedlichen Abstand zu dem Ringelement 26 aufweisen. Dies bedeutet, das durchmesserkleinere Halteelement 18 hat einen geringeren Abstand zum Ringelement 26 als das jeweils beanstandende durchmessergrößere Halteelement 16 beziehungsweise 14. Unter Abstand wird hier die Höhenposition der Halteelemente 14, 16, 18 verstanden.

In Figur 3 ist in einer schematischen Perspektivansicht nochmals der Niederhalter 10 gezeigt. Hierbei wird der in etwa domhafte Aufbau des Niederhalters 10 deutlich. Bei einer punktförmig auf das Ringelement 26 einwirkenden Kraft, durch den - in den Figuren 1 bis 3 nicht gezeigten - ablaufenden Draht von einem Drahtcoil wird das Ringelement 26 federnd nach unten oder oben ausweichen. Der Draht wird somit jederzeit unabhängig von seiner Lage auf dem Ringelement 26 immer durch eine von dem Niederhalter 10 ausgehenden Federkraft unterstützt, so dass eine Schlaufenbildung, und damit ein eventueller Abriss des Drahtes während des Ablaufens vermieden wird.

In Figur 4 ist in einer schematischen Seitenansicht der Einsatz des Niederhalters 10 in einem Drahtfass 30 verdeutlicht. Innerhalb des Drahtfasses 30 ist ein Drahtcoil 32 angeordnet, das eine Vielzahl von schlaufenförmig aufgewickelten Drahtwindungen eines Drahtes 34 aufweist.

Der Einsatz von Drahtfässern 30 und darin angeordneten Drahtcoils 32 zum Ablaufen von Draht 34 ist allgemein bekannt, so dass hierauf in der vorliegenden Beschreibung nicht näher eingegangen wird. Der Draht 34 wird beispielsweise einem Schweißautomaten zugefügt.

Der Niederhalter 10 liegt mit seinem Grundelement 12 auf der oberen Stirnfläche 36 des Drahtcoils 32 auf. Der Draht 34 wird durch den Niederhalter 10 geführt und liegt punktförmig an dem Ringelement 26 auf. Da beim Ablaufen des Drahtes 34 sich dieser vom Drahtcoil 32 umlaufend löst, ist wichtig, dass dieser mit einer bestimmten Zugspannung abgezogen wird. Beim Ablaufen des Drahtes 34 vom Drahtcoil 32 kann es zu Zugkraftschwankungen kommen, die durch die federelastische Ausbildung des Niederhalters 10 ausgeglichen wird. Hierdurch wird eine Schlaufenbildung des Drahtes 34 vermieden.

### Bezugszeichen

- 10: Niederhalter
- 12: Grundelement
- 14,16,18: Halteelement
- 20: Längsachse
- 22: Haltesteg
- 24: Führungselement
- 26: Ringelement
- 28: Verbindungselement
- 30: Drahtfass
- 32: Drahtcoil
- 34: Draht
- 36: Stirnfläche

## Patentansprüche

1. Niederhalter (10) für in Drahtfässer (30) einbringbare Drahtcoils (32) mit einem Grundelement (12), einem oberhalb des Grundelementes (12) angeordneten Führungselement (24), für aus dem Drahtcoil (32) ablaufenden Draht (34) und wenigstens ein Verbindungselement (28) zwischen dem Grundelement (12) und dem Führungselement (24), wobei das Grundelement (12) wenigstens zwei ringförmig angeordnete Halteelemente (14, 16, 18) für die Verbindungselemente (28) aufweist, die koaxial zueinander angeordnet sind, die ringförmigen Halteelemente (14, 16, 18) einen unterschiedlichen Durchmesser besitzen und das durchmessergrößte Halteelement (14) einen größeren Abstand zum Führungselement (24) aufweist als das jeweils benachbarte durchmesserkleinere Halteelement (16, 18), **dadurch gekennzeichnet, dass** das wenigstens eine Verbindungselement (28) entlang einer spiralförmig verlaufenden Kurvenbahn zwischen dem Grundelement (12) und dem Führungselement (24) verläuft.

2. Niederhalter (10) nach Anspruch 1, **dadurch gekennzeichnet, dass** drei um 120° versetzt verlaufende Verbindungselemente (28) angeordnet sind.

3. Niederhalter (10) nach einem der vorhergehenden Ansprüche, **dadurch gekennzeichnet, dass** die ringförmigen Halteelemente (14, 16, 18) untereinander mit Haltestegen (22) verbunden sind.

4. Niederhalter (10) nach Anspruch 3, **dadurch gekennzeichnet, dass** die Haltestege (22) radial verlaufen.

5. Niederhalter (10) nach einem der vorhergehenden Ansprüche, **dadurch gekennzeichnet, dass** die Verbindungselemente (28) den durchmesserkleinsten Haltering (18) mit dem Führungselement (24) verbinden.

6. Niederhalter (10) nach einem der vorhergehenden Ansprüche, **dadurch gekennzeichnet, dass** das Führungselement (24) ein geschlossenes Ringelement (26) ist.

7. Niederhalter (10) nach Anspruch 6, **dadurch gekennzeichnet, dass** das Ringelement (26) einen kleineren Durchmesser besitzt, als das durchmesserkleinste Halteelement (18) des Grundelementes (12).

## Claims

1. A retaining device (10) for coils (32) of wire in wire barrels (30), having a base element (12), a guide element (24) arranged above the base element (12) for wire (34) running off of the coil (32) of wire, and at least one connecting element (28) between the base element (12) and the guide element (24), wherein
the base element (12) has at least two retaining elements (14, 16, 18) arranged in a ring for the connecting elements (28) which are arranged coaxially to each other, the ring retaining elements (14, 16, 18) present a different diameter, and the retaining element (14) with the largest diameter has a larger distance to the guide element (24) than the respectively adjacent retaining element (16, 18) with a smaller diameter, **characterized in that** the at least one connecting element (28) runs along a spirally running curved path between the base element (12) and the guide element (24).

2. The retaining device (10) according to Claim 1, **characterized in that** three connecting elements (28) which are offset by 120° are arranged.

3. The retaining device (10) according to any one of the preceding claims, **characterized in that** the ring retaining elements (14, 16, 18) are connected with each other by retaining webs (22).

4. The retaining device (10) according to Claim 3, **characterized in that** the retaining webs (22) run radially.

5. The retaining device (10) according to any one of the preceding claims, **characterized in that** the connecting elements (28) connect the retaining ring (18) with the smallest diameter with the guide element (24).

6. The retaining device (10) according to any one of the preceding claims, **characterized in that** the guide element (24) is a closed ring element (26).

7. The retaining device (10) according to Claim 6, **characterized in that** the ring element (26) presents a smaller diameter than the retaining element (18) of the base element (12) with the smallest diameter.

## Revendications

1. Élément de retenue (10) pour bobines de fils métalliques (32) recevables dans des corps cylindriques à fils (30), comprenant un élément de fond (12), un élément de guidage (24) disposé au-dessus de l'élément de fond (12), pour le fil métallique (34) sortant de la bobine de fil métallique (32) et au moins un élément de liaison (28) entre l'élément de fond (12) et l'élément de guidage (24), dans lequel
l'élément de fond (12) présente au moins deux éléments de support (14, 16, 18) disposés de manière annulaire pour les éléments de liaison (28), lesquels sont disposés coaxialement l'un par rapport à l'autre, les éléments de support annulaires (14, 16, 18) comportent un diamètre différent et l'élément de support (14) avec le diamètre le plus grand présente une distance plus grande par rapport à l'élément de guidage (24) que l'élément de support (16, 18) avec le diamètre plus petit respectivement adjacent, **caractérisé en ce que** l'au moins un élément de liaison (28) s'étend le long d'une trajectoire incurvée s'étendant en forme de spirale entre l'élément de fond (12) et l'élément de guidage (24).

2. Élément de retenue (10) selon la revendication 1, **caractérisé en ce que** trois éléments de liaison (28) sont disposés et s'étendent en quinconce à 120°.

3. Élément de retenue (10) selon l'une des revendications précédentes, **caractérisé en ce que** les éléments de support annulaires (14, 16, 18) sont reliés les uns en dessous des autres à des traverses de support (22).

4. Élément de retenue (10) selon la revendication 3, **caractérisé en ce que** les traverses de support (22) s'étendent radialement.

5. Élément de retenue (10) selon l'une des revendications précédentes, **caractérisé en ce que** les éléments de liaison (28) relient à l'élément de guidage (24) la bague de support (18) avec le diamètre le plus petit.

6. Élément de retenue (10) selon l'une des revendications précédentes, **caractérisé en ce que** l'élément de guidage (24) est un élément annulaire fermé (26).

7. Élément de retenue (10) selon la revendication 6, **caractérisé en ce que** l'élément annulaire (26) comporte un diamètre plus petit que l'élément de support (18) de l'élément de fond (12) qui a le diamètre le plus petit.
